# EUROPÄISCHE PATENTSCHRIFT

(11) **EP 1 212 177 B1**
(45) Veröffentlichungstag und Bekanntmachung des Hinweises auf die Patenterteilung: **17.01.2007**
(21) Anmeldenummer: 00962438.8
(22) Anmeldetag: 04.09.2000
(51) Int. Cl.: B27D 5/00, B23C 3/12, B23Q 11/00

(54) **BEARBEITUNGSAGGREGAT MIT EINEM ROTIERENDEN WERKZEUG UND MIT EINER ABSAUGHAUBE**
TREATMENT UNIT WITH A ROTATING TOOL AND A SUCTION HOOD
ENSEMBLE D'USINAGE COMPRENANT UN OUTIL ROTATIF ET UNE HOTTE D'ASPIRATION

(30) Priorität: 17.09.1999 DE 19944728
(43) Veröffentlichungstag der Anmeldung: 12.06.2002
(73) Patentinhaber: HOMAG MASCHINENBAU AG, D-72296 Schopfloch (DE); Ledermann GmbH & Co. KG, 72160 Horb (DE)
(72) Erfinder: KALMBACH, Kurt, 72275 Alpirsbach (DE); KALMBACH, Wilhelm, 72296 Schopfloch (DE); GITTEL, Hans-Jürgen, 72108 Rottenburg (DE); WESTFAL, Ewald, 72336 Balingen (DE)
(74) Vertreter: HOFFMANN EITLE
(86) Internationale Anmeldenummer: PCT/EP2000/008630
(87) Internationale Veröffentlichungsnummer: WO 2001/021363

(56) Entgegenhaltungen:
- EP-A- 0 916 453
- DE-A- 2 523 450
- DE-A- 19 644 137
- DE-B- 1 077 031
- US-A- 3 837 383
- US-A- 3 882 598

## Beschreibung

### Technisches Gebiet

Die vorliegende Erfindung betrifft eine Bearbeitungsvorrichtung mit einem spanabtragenden Werkzeug zur Bearbeitung von Holz, Kunststoff oder ähnlichem, das mit einer Absaughaube verbunden ist, um eine optimale Spanabfuhr zu ermöglichen. Insbesondere betrifft die vorliegenden Erfindung eine Bearbeitungsvorrichtung, wie es zur Bearbeitung von beispielsweise leisten- oder plattenförmigen Werkstücken in einem stationären oder Durchlaufbearbeitungsgang eingesetzt wird. Werden die Späne bei derartigen Werkzeugen nicht optimal abgesaugt, so kann es zu sogenannten Eindruckspuren auf der bearbeiteten Werkstückoberfläche durch liegengebliebene Späne kommen, was unerwünscht ist.

### Stand der Technik

Herkömmlicherweise werden Späne, die bei der Bearbeitung von Holz, Kunststoffen oder ähnlichem, wie beispielsweise Holzersatz- oder Verbundwerkstoffen, durch ein spanabtragendes Bearbeitungswerkzeug anfallen, über eine Absaugvorrichtung in der Umgebung des Eingriffspunktes zwischen der Schneide und dem Werkstück abgesaugt. Eine derartige Absaugung hat sich allerdings als unzureichend erwiesen, so dass Späne teilweise mehrfach geschnitten wurden, was die Lebensdauer der Schneidwerkzeuge herabsetzt, oder Eindruckspuren von Spänen an der bearbeiteten Werkstückoberfläche zurückblieben. Weiterhin ist die Problematik bekannt, dass bei verklebten Werkstoffen häufig ein Gemisch aus Kleber und Spänen entsteht, der zu Verklumpungen führen kann, wodurch die gesamte Spanabfuhr stark beeinträchtigt wird.

Aus dem Schlussbericht "Entwicklung von Fräswerkzeugen mit innenliegender Spanabführung" der TU Dresden, Institut für Holz- und Papiertechnik, vom 27. April 1999 ist ein Fräswerkzeug bekannt, das eine direkt vor der Schneide angebrachte Spanaufnahmeöffnung aufweist, die mit einem Hohlraum im Inneren des Werkzeugs verbunden ist. Dieser Hohlraum weist seinerseits eine axiale Auswurföffnung zur Spanabfuhr auf, die zu der von der Antriebsspindel wegweisenden Seite geöffnet ist. In dem Werkzeughohlraum des Fräswerkzeugs ist ein gestellfester zylindrischer bis konischer Einbau vorgesehen, der der Werkzeuginnenform dünnwandig angepasst ist, wobei im Wirkstellenbereich der rohrförmige Einbau wenigstens ein Fenster aufweist. Darüber hinaus ist an der Innenseite des rohrförmigen Einbaus hinter dem Spanfenster ein schrägstehendes, über die gesamte Breite des rohrförmigen Einbaus reichendes Leitelement angebracht. Auf diese Weise können Späne von der Wirkstelle durch das Werkzeug hindurch an der Werkzeugseite abgesaugt werden, die von der das Werkzeug antreibenden Spindel weg weist. Das Werkzeug selbst ist dabei nur in radialer Richtung durchbrochen.

Weiterhin sind Bearbeitungsaggregate bekannt, deren Werkzeuge mehrere mit Schneiden versehene Arme aufweisen, mit denen Werkstücke bearbeitet werden können. Eine Absaugung der hierbei entstehenden Späne erfolgt dabei über eine Absaughaube, die auf der Seite der Antriebsspindel des Werkzeugs angeordnet ist. Die Absaughaube weist im wesentlichen eine U-förmige Gestalt auf, so dass die Absaughaube in einer Richtung vollständig offen ist. Die Absaugung von Luft und Spänen aus der Absaughaube erfolgt dabei auf der der Öffnung der Absaughaube gegenüberliegenden Seite.

Die DE 1 077 031 B beschreibt einen Fräskopf für die Metall- bzw. Leichtmetallbearbeitung, wobei der Fräskopf mit Fräsmessern versehen ist, deren Zahl je nach Fräskopf größer bestimmt wird. Im Fräskopf ist ein trichterförmiger Ausschnitt vorgesehen. Dieser trichterförmige Ausschnitt, der sich in rohrförmige Abdichtungen am oberen und unteren Trichterrand fortsetzt, die gegen die Außenluft vorgesehen sind, dient dazu, die Späne über einen Saugluftstrom aus dem Fräskopf über den Ringraum, der sich aus der Abdichtung bildet, in das Späneabsaugrohr zu führen. Der Fräskopf ist in axialer Richtung durchgängig gestaltet.

### Darstellung der Erfindung

Der vorliegenden Erfindung liegt das technische Problem zugrunde, eine Bearbeitungsvorrichtung mit einem spanabtragenden Werkzeug bereitzustellen, das eine optimale Spanabfuhr bei geringem fertigungstechnischen Aufwand und niedrigen Betriebskosten wirkungsvoll ermöglicht und Verklumpungen der Späne verhindert.

Diese Aufgabe wird mit einer Bearbeitungsvorrichtung mit den Merkmalen von Patentanspruch 1 gelöst.

Der vorliegenden Erfindung liegt der Gedanke zugrunde, die natürliche Bewegungsrichtung eines an der Schneide eines spanabtragenden Werkzeugs entstehenden Spanes zu dessen Abtransport mit auszunutzen. Zu diesem Zweck wird nun erstmals ein an die Schneide eines spanabtragendes Werkzeugs angrenzender Bereich eines scheibenförmigen Abschnitts des Werkzeugs sowohl in axialer Richtung als auch vollständig in radialer Richtung durch eine Spanaufnahmeöffnung durchbrochen.

Gleichzeitig ist eine ortsfeste Absaughaube, die koaxial zu dem drehantreibbaren Werkzeug und an dessen Maschinenspindelseite angeordnet ist, mit einem ebenfalls ortsfesten Ring versehen, der bis dicht an die Schneiden des Werkzeugs heranreicht, so dass nur ein geringer Spalt zwischen den Schneiden und dem Ring an der Absaughaube entsteht. Die Absaughaube mit dem daran angeordneten Ring umgreift das Werkzeug auf diese Weise in Umfangsrichtung vollständig und in axialer Richtung zumindest teilweise. Auf diese Weise kann wirkungsvoll vermieden werden, dass es zu Ansammlungen oder gar Verklumpungen von Spänen oder einem Späne-Leim-Gemisch kommen kann. Die an der Schneide entstehenden Späne werden in axialer Richtung in einen hohlen Innenraum des Werkzeugs durch die Spanaufnahmeöffnung hindurch geleitet, während weitgehend vermieden wird, dass diese das rotierende Werkzeug berühren. Dabei wird die Bewegungsrichtung der an der Schneide entstehenden Späne durch Luftabsaugung aus der Absaughaube unterstützt. Durch die im Bereich der Spanaufnahmeöffnung entstehende Luftverwirbelung sowie die Luftabsaugung aus der Absaughaube wird vermieden, dass sich Späne an dem an die Schneiden dicht angrenzenden Ring der Absaughaube ablagern. Sollte es an diesem Ring trotzdem zu Ablagerungen von Spänen oder einem Späne-Leim-Gemisch kommen, so werden diese stets durch das Werkzeug selbst mit der die Spanaufnahmeöffnung begrenzenden Kante mechanisch entfernt. Auf diese Weise wird die Spanabfuhr erheblich verbessert und eine Verklumpung oder ein Verstopfen durch ein Späne-Leim-Gemisch kann wirkungsvoll vermieden werden.

Auf diese Weise können die an der Schneide des Werkzeugs entstehenden Späne besonders wirkungsvoll von dem spanabtragenden Werkzeug abtransportiert werden, da die natürliche Bewegungsrichtung der Späne durch die Luftströme der Absaugung unterstützt wird. Gleichzeitig kann die abzuführende Luftmenge gering gehalten werden, da die Späne durch den Luftstrom nicht abgelenkt werden müssen. Der Abtransport der Späne in axialer Richtung durch das Werkzeug hindurch bietet zudem den Vorteil, dass die Geometrie der dem Werkstück zugewandten Seite des Werkzeugs frei gestaltbar ist, ohne dass auf eine Spanabsaugung in diesem Bereich Rücksicht genommen werden müsste. Auch wird auf diese Weise verhindert, dass Späne mit dem zu bearbeitenden Werkstück bzw. der schon bearbeiteten Werkstückoberfläche in Kontakt kommen. Derartige erfindungsgemäße Bearbeitungsaggregate eignen sich insbesondere für Durchlaufmaschinen.

Nach einer bevorzugten Ausführungsform der vorliegenden Erfindung ist die Absaughaube variabel an den Durchmesser des scheibenförmigen Abschnitts des spanabtragenden Werkzeugs anpassbar, so dass die Breite des Spalts zwischen dem scheibenförmigen Abschnitt des spanabtragenden Werkzeugs und der Innenkante der Absaughaube minimal bleibt. Dies kann beispielsweise über einen ringartigen Einsatz erfolgen, der den Innendurchmesser der Absaughaube an den Außendurchmesser des scheibenförmigen Abschnitts des Werkzeugs anpasst. Durch diese Minimierung des Spalts zwischen dem spanabtragenden Werkzeug und der Absaughaube wird eine unnötig hohe Absaugleistung der Absaughaube vermieden, was zu geringeren Betriebskosten führt.

Vorzugsweise ist die Absaugöffnung in der haubenförmigen Absaughaube, über die Luft und Späne aus der haubenförmigen Absaughaube abgeführt werden, um 20° bis 150° in Richtung der Bewegung der Werkzeugschneide versetzt zu dem Entstehungspunkt des Spans angeordnet. Besonders bevorzugt ist eine Anordnung der Absaugöffnung im Bereich von etwa 90° versetzt zu dem Entstehungspunkt des Spans in.Bewegungsrichtung der Werkzeugschneide. Auf diese Weise kann sichergestellt werden, dass zusätzlich zu der natürlichen Bewegung des Spans in axialer Richtung auch die durch Fliehkräfte erzeugte Bewegung des Spans in radialer Richtung zum Spanabtransport mit ausgenutzt wird. Die Luftabsaugung durch die Öffnung in der haubenförmigen Absaughaube kann somit die natürliche Bewegungsrichtung des Spans optimal unterstützen und verstärken, so dass eine wirkungsvolle Spanabfuhr gewährleistet werden kann.

### Kurze Beschreibung der Zeichnungen

Im folgenden werden unter Bezugnahme auf die beigefügten Zeichnungen vorteilhafte Ausführungsformen der vorliegenden Erfindung rein beispielhaft näher erläutert und beschrieben. Es zeigen:
- Fig. 1: eine schematische Darstellung eines erfindungsgemäßen Werkzeugs mit einer Absaughaube nach einer ersten Ausführungsform der vorliegenden Erfindung;
- Fig. 2: eine schematische Darstellung eines erfindungsgemäßen Werkzeugs mit Absaughaube nach einer zweiten Ausführungsform;
- Fig. 3: eine schematische, dreidimensionale Darstellung einer weiteren Ausführungsform eines erfindungsgemäßen Werkzeugs mit Absaughaube;
- Fig. 4: eine schematische, dreidimensionale Ansicht der Absaughaube aus Fig. 3, wobei das Werkzeug aus Übersichtlichkeitsgründen weggelassen wurde;
- Fig. 5: eine schematische Draufsicht auf die einem Werkstück zugewandte Seite eines erfindungsgemäßen Werkzeugs nach Fig. 1 ohne Absaugvorrichtung; und
- Fig. 6: eine schematische Seitenansicht des Werkzeugs von Fig. 5.

### Beschreibung von bevorzugten Ausführungsformen der Erfindung

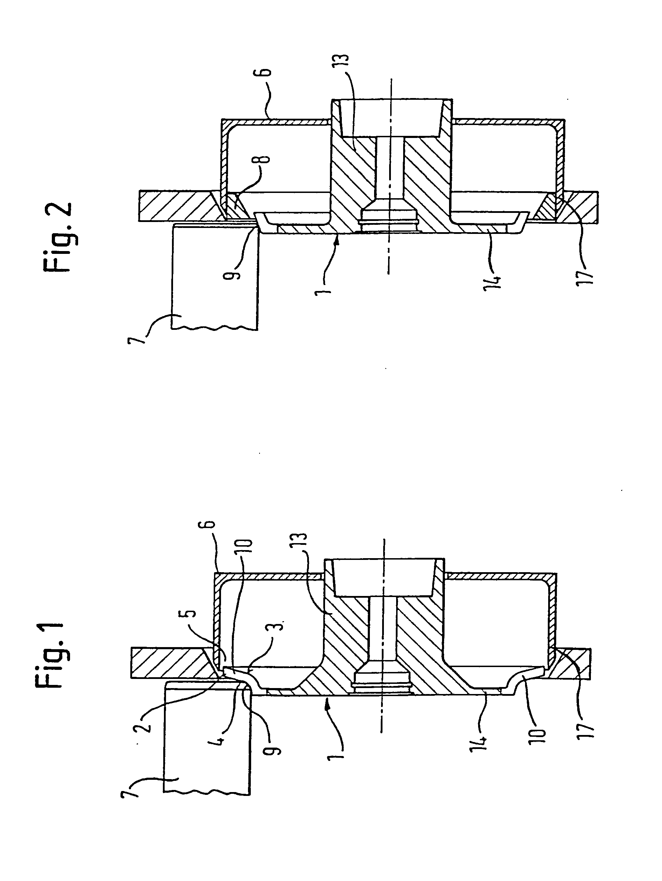

In Fig. 1 ist schematisch eine erste Ausführungsform der Erfindung gezeigt. Ein spanabtragendes Werkzeug 1 ist im wesentlichen durch ein zylinderförmiges Anschlussstück 13 zur Aufnahme der Spindel einer Werkzeugmaschine (nicht gezeigt) sowie einen damit verbundenen, im wesentlichen scheibenförmigen Abschnitt 14 gebildet. Im radial äußeren Bereich des scheibenförmigen Abschnitts 14 sind mehrere Schneiden 4 im Umfangsbereich des spanabtragendes Werkzeugs 1 angeordnet. Die spindelseitige Innenkontur 3 des Werkzeugs 1 ist der Kontur der Schneide 4 nachgeformt. Auf diese Weise entsteht auf der der Werkzeugspindel zugewandten Seite des Werkzeugs ein hohler Werkzeuginnenraum. Fig. 1 zeigt das spanabtragende Werkzeug 1 im Eingriff mit einem zu bearbeitenden Werkstück 7.

Koaxial mit dem spanabtragenden Werkzeug 1 ist eine Absaughaube 6 positioniert, die den dem Werkstück 7 angewandten Bereich des scheibenförmigen Abschnitts 14 sowie des zylindrischen Anschlussstücks 13 umgreift. Die Absaughaube 6 ist dabei ortsfest angeordnet, während das spanabtragende Werkzeug 1 durch die Spindel einer Werkzeugmaschine (nicht gezeigt) drehbar gelagert ist. In dem in Fig. 1 linken Bereich der Absaughaube 6 ist ein Ring 17. vorgesehen, der dicht an die Schneide 4 angrenzend das Werkzeug 1 in Umfangsrichtung vollständig und in axialer Richtung teilweise umgreift. Das Umgreifen des Werkzeugs 1 durch den Ring 17 in axialer Richtung wird dabei durch das Werkstück 7 begrenzt, dessen dem Ring 17 zugewandte Oberfläche einen möglichst geringen Luftspalt mit diesem definiert. Gleichzeitig bildet der an der Absaughaube 6 angebrachte Ring 17 zusammen mit der äußersten Umfangskante des Werkzeugs 1 einen Spalt, der so gewählt ist, dass eine Berührung zwischen dem Werkzeug 1 und dem Ring 17 der Absaughaube 6 auch bei dynamischer Bewegung und bei der Bearbeitung des Werkstücks 7 verhindert wird.

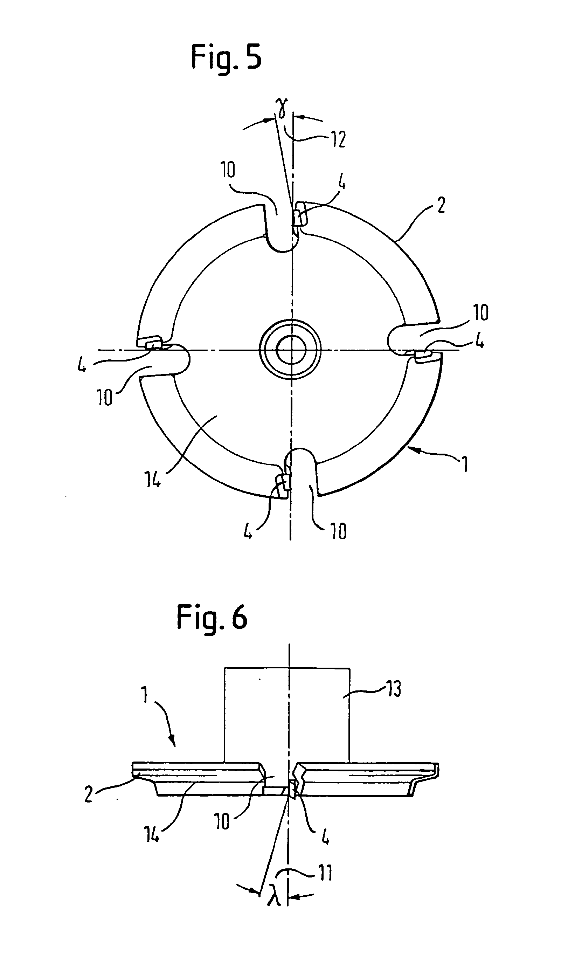

Wie in Fig. 1 dargestellt, ist ein durch den scheibenförmigen Abschnitt 14 gebildeter äußerer Ring 2 des Werkzeugs 1, der der Kontur der Schneiden 4 angepasst ist, bereichsweise unterbrochen, so dass eine Spanaufnahmeöffnung 10 gebildet wird. Dies ist beispielsweise in den Figuren 5 und 6 besonders deutlich zu erkennen, die jeweils das in Fig. 1 dargestellte Werkzeug 1 ohne die Absaughaube 6 und das zu bearbeitende Werkstück 7 zeigen. Der Achswinkel 11 sowie der Spanwinkel 12 sind in Abhängigkeit der Kontur der Spanaufnahmeöffnung 10 so gewählt, dass ein an den Schneiden 4 entstehender Span sich nach seiner Entstehung ungehindert bewegen kann. Das bedeutet, ein Span wird entsprechend seiner natürlichen Bewegungsrichtung in einen Hohlraum befördert, der durch die Absaughaube 6 und das Werkzeug 1 gebildet wird. Dabei kommt ein Span nicht mit dem Grundkörper des Werkzeugs 1 in Berührung, so dass der Span ungehindert in den durch die Absaughaube und das Werkzeug gebildeten Hohlraum eindringen kann.

Wie in Fig. 5 dargestellt, weist die Spanaufnahmeöffnung 10 eine Größe auf, die ein ungehindertes Durchtreten des Spans in aixaler Richtung durch das Werkzeug 1 ermöglicht. In der in den Fig. 5 und 6 gezeigten bevorzugten Ausführungsform sind vier Schneiden 4 gleichmäßig am Umfang des Werkzeugs 1 verteilt. Die Spanaufnahmeöffnungen 10 sind dabei im wesentlichen U-förmig ausgestaltet, wobei die Öffnungen des U's radial zur Außenumfangsseite des Werkzeugs 1 geöffnet sind. Selbstverständlich sind dem Einsatzzweck des Werkzeugs 1 entsprechend auch andere Ausgestaltungen der Spanaufnahmeöffnung 10 bzw. Ausrichtungen der Spanaufnahmeöffnung 10 denkbar. Auch die Anzahl der am Werkzeug 1 vorgesehenen Schneiden 4 ist nicht auf vier Stück begrenzt, vielmehr kann eine beliebige Anzahl von Schneiden 4 an dem Werkzeug 1 vorgesehen sein, wobei im allgemeinen zwei bis acht Schneiden, die gleichmäßig in Umfangsrichtung an dem Werkzeug 1 verteilt sind, bevorzugt werden. In Abhängigkeit der Geometriedaten der Schneide können die Form sowie die Breite und die Länge der Spanaufnahmeöffnung 10 variiert werden, wobei zu berücksichtigen ist, dass einerseits eine optimale Spannabfuhr durch die Spanaufnahmeöffnung 10 gewährleistet sein muss, gleichzeitig allerdings eine Schwächung des Werkzeugs durch eine zu große Spanaufnahmeöffnung 10 vermieden werden sollte. Zudem steigt mit zunehmender Größe der Spanaufnahmeöffnung 10 auch die durch die Absaughaube 6 abzusaugende Luftmenge bei gleicher Luftabsauggeschwindigkeit.

Aus der Absaughaube 6 wird an einer in Fig. 1 nicht dargestellten Stelle Luft aus der Absaughaube 6 abgezogen, so dass die in den Hohlraum zwischen der Absaughaube 6 und dem Werkzeug 1 gelangten Späne zusammen mit der Luft aus der Absaughaube 6 abgesaugt werden können. Gleichzeitig wird durch die Luftabsaugung aus der Absaughaube 6 die Bewegungsrichtung der Späne nach ihrem Entstehen verstärkt, da die Späne durch die Spanaufnahmeöffnung 10 in dem äußeren Ring 2 des Werkzeugs 1 gesaugt werden.

Die Absaughaube 6 ist so ausgestaltet, dass ein zwischen dem zylindrischen Anschlussstück 13 des spanabtragenden Werkzeugs 1 und einer zentralen Öffnung in der Absaughaube 6 gebildeter Spalt möglichst klein ist. Auch der Spalt zwischen dem Umfangsrand des äußeren Rings 2 des Werkzeugs 1 und der Innenumfangsfläche der Absaughaube 6 wird möglichst gering gehalten. Auf diese Weise kann verhindert werden, dass innerhalb der Absaughaube 6 abgelenkte Späne aus dem durch die Absaughaube 6 und das Werkzeug 1 gebildeten Hohlraum an einer nicht gewünschten Stelle austreten, und so die Arbeitsqualität mindern oder zur Verschmutzung führen. Gleichzeitig kann durch eine möglichst geringe Breite der Spalte zwischen der Absaughaube 6 und dem Werkzeug 1 die Saugleistung der Luftabsaugung aus der Absaughaube 6 gering gehalten werden.

Die Innenkontur 3 des äußeren Rings 2 ist, wie beispielsweise aus den Figuren 1 und 6 deutlich wird, der Geometrie der Schneiden 4 angepasst, so dass eine Ablagerung von Spänen in dem durch die Absaughaube 6 und das Werkzeug 1 gebildeten Hohlraum vermieden werden kann. Zudem kann auf diese Weise die Wanddicke des äußeren Rings 2 gering gehalten werden. Zur Unterstützung der Bewegungsrichtung der Späne wird beispielsweise die in den Fig. 1 und 2 gezeigte Kegelstumpfform der Innenkontur 3 bevorzugt.

In Fig. 2 ist eine weitere Ausführungsform eines erfindungsgemäßen Werkzeugs mit Absaugung dargestellt. Im Vergleich zu dem in Fig. 1 dargestellten Werkzeug 1 ist das in Fig. 2 dargestellte Werkzeug 1 mit einem geringeren Durchmesser des scheibenförmigen Abschnitts 14 ausgebildet. Die Absaughaube 6 ist in Fig. 2 mit der in Fig. 1 gezeigten Absaughaube 6 identisch. Um zu verhindern, dass durch den geringeren Durchmesser des scheibenförmigen Abschnitts 14 des Werkzeugs 1 ein zu großer Spalt zu dem Ring 17 der Absaughaube 6 entstehen würde, ist ein weiterer Ring 8 innen in die Absaughaube 6 eingepasst, so dass der Spalt zwischen dem weiteren Ring 8 und dem Werkzeug 1 minimal wird. Auf diese Weise kann sichergestellt werden, dass nicht unnötig viel Luft durch einen zu großen Spalt zwischen der Absaughaube 6 und dem Werkzeug 1 in den durch das Werkzeug 1 und die Absaughaube 6 gebildeten Hohlraum gesaugt wird. Dadurch wird vermieden, dass eine unnötig große Absaugleistung zum Abtransport der Späne und der Luft erforderlich wäre. Vorzugweise lassen sich den Werkzeuggrößen entsprechend verschiedene weitere Ringe 8 jeweils in die Absaughaube 6 bzw. den Ring 17 einpassen.

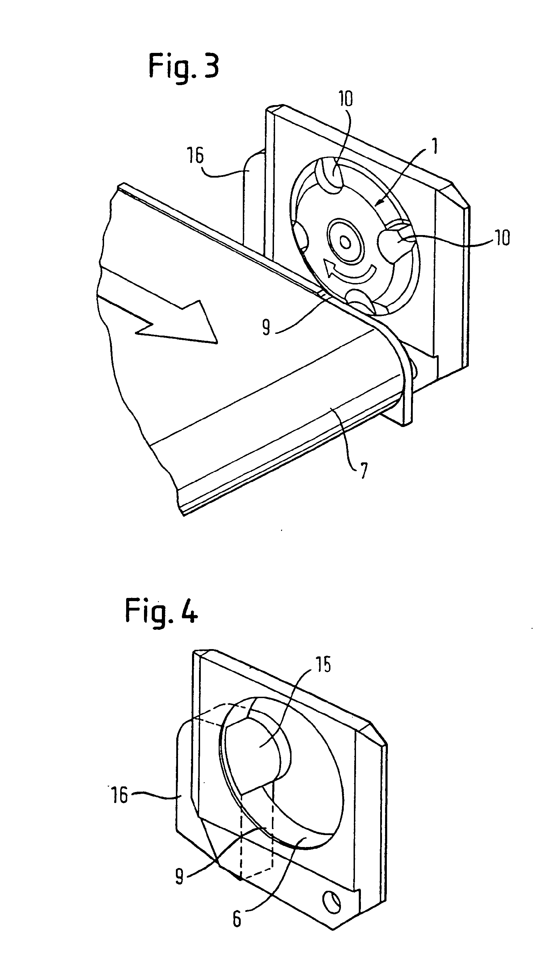

In Fig. 3 ist eine dreidimensionale schematische Darstellung eines erfindungsgemäßen Werkzeugs mit Absaughaube dargestellt. In dem in Fig. 3 gezeigten Zustand befindet sich das spanabtragende Werkzeug 1 im Eingriff mit einem Werkstück 7. Wie in Bezug auf die Figuren 1 und 2 bereits erläutert, wird ein am Eingriffspunkt 9 der Schneiden 4 erzeugter Span jeweils durch die Spanaufnahmeöffnungen 10 in einen durch die Absaughaube 6 und das Werkzeug 1 gebildeten Hohlraum befördert. Dabei bewegt sich der Span im wesentlichen gemäß seiner natürlichen Bewegungsrichtung durch die Zerspanung und kommt nicht mit dem Grundkörper des Werkzeugs 1 in Eingriff. Die Absaughaube 6 ist über eine Absaugöffnung (nicht gezeigt in Fig. 3) mit einem Absaugkanal 16 verbunden. Über diesen Absaugkanal 16 werden Luft und Späne aus dem durch die Absaughaube 6 und das Werkzeug 1 gebildeten Hohlraum abgezogen.

In Fig. 4 ist eine Absaughaube 6 zusammen mit dem daran angeschlossenen Absaugkanal 16 dargestellt, wobei zum besseren Verständnis das spanabtragende Werkzeug 1 selbst weggelassen wurde. Aus der schematischen Darstellung von Fig. 4 ist ersichtlich, dass der Absaugkanal 16 über eine Absaugöffnung 15 mit der Absaughaube 6 verbunden ist. Die Absaugöffnung 15 ist dabei versetzt zu dem Eingriffspunkt 9 der Schneiden 4 angeordnet, der in den Figuren 3 und 4 angedeutet ist. Die Absaugöffnung 15 der Absaughaube 6 ist in einem Bereich zwischen 20° und 150° in Bewegungsrichtung der Schneiden 4 des Werkzeugs 1 (siehe Pfeil in Fig. 3) versetzt angeordnet. Eine Anordnung der Absaugöffnung 15 um etwa 90° zu dem Eingriffspunkt 9 der Schneiden 4 versetzt hat sich als besonders günstig erwiesen, da die an dem Eingriffspunkt 9 der Schneiden 4 entstehenden Späne durch die Fliehkräfte zusätzlich zu ihrer im wesentlichen axialen Bewegungsrichtung auch in radialer Richtung wegfliegen, so dass die Absaugung der Luft und der Späne aus der Absaughaube 6 durch die in Fig. 4 gezeigte Anordnung der Absaugöffnung 15 unterstützt wird.

In den Fig. 1 und 2 ist der Ring 17 im wesentlichen an der äußeren Seite der Absaughaube 6 als ein gesondertes Bauteil angeordnet. Selbstverständlich sind allerdings auch Ausführungsformen möglich, bei denen der Ring 17 an der inneren Umfangsseite der Absaughaube 6 angeordnet ist und/oder mit dieser einstückig ausgebildet ist. Dabei sollte gewährleistet sein, dass zum universellen Einsatz der Absaughaube 6 bei verschiedenen Werkzeuggrößen entsprechende weitere Ringe 8 an der Absaughaube 6 oder dem Ring 17 befestigbar sind.

## Patentansprüche

1. Bearbeitungsvorrichtung zur Bearbeitung von Werkstücken aus Holz oder Kunststoff,
mit einem spanabtragenden, drehantreibbaren Werkzeug (1) mit zumindest einer im Umfangsbereich des Werkzeugs angeordneten Schneide (4),
mit einer ortsfesten Absaughaube (6), die koaxial zu dem rotierenden Werkzeug (1) angeordnet ist und dieses von einer Antriebsseite des Werkzeugs (1) her zumindest teilweise umgreift, wobei die Absaughaube (6) mit einer Saugluftquelle in Verbindung bringbar ist und ein ortsfester an der Absaughaube (6) angeordneter Ring (17) dicht an die Schneide (4) angrenzend das Werkzeug (1) in Umfangsrichtung vollständig und in axialer Richtung zumindest teilweise umgreift,
wobei jeweils ein an die Schneide (4) angrenzender Bereich (2) des Werkzeugs (1) in axialer und in radialer Richtung eine Spanaufnahmeöffnung (10) zur Durchleitung von Spänen in einen hohlen Innenraum, der zwischen dem Werkzeug (1) und der Absaughaube gebildet ist, aufweist,
**dadurch gekennzeichnet, dass**
die Spanaufnahmeöffnung (10) in axialer Richtung des Werkzeugs (1) gesehen im Wesentlichen U-förmig ausgestaltet ist, dass die U-förmige Spanaufnahmeöffnung (10) in axialer Richtung des Werkzeugs (1) gesehen radial nach außen geöffnet ausgerichtet ist und axial das Werkzeug vollständig durchbricht.

2. Bearbeitungsvorrichtung nach Anspruch 1, **dadurch gekennzeichnet, dass** der Ring (17) an der äußeren Umfangsseite der Absaughaube (6) angeordnet ist.

3. Bearbeitungsvorrichtung nach Anspruch 1, **dadurch gekennzeichnet, dass** der Ring (17) an der inneren Umfangsseite der Absaughaube (6) angeordnet ist.

4. Bearbeitungsvorrichtung nach einem der Ansprüche 1 bis 3, **dadurch gekennzeichnet, dass** der Ring (17) einstückig mit der Absaughaube (6) ausgebildet ist.

5. Bearbeitungsvorrichtung nach einem der vorangegangenen Ansprüche, **dadurch gekennzeichnet, dass** eine Absaugöffnung (15), die dazu vorgesehen ist, die Absaughaube (6) über einem Absaugkanal (16) mit der Saugluftquelle zu verbinden, in Bewegungsrichtung der Schneide (4) des rotierenden Werkzeugs (1) versetzt zu einem Eingriffspunkt (9) der Schneide (4) mit dem Werkstück (7) angeordnet ist.

6. Bearbeitungsvorrichtung nach einem der vorangegangenen Ansprüche, **dadurch gekennzeichnet, dass** die zur Absaughaube (6) gerichtete Seite des Werkzeugs (1) eine der Kontur der Schneide (4) nachgeformte Kontur (3) aufweist.

7. Bearbeitungsvorrichtung nach einem der vorangegangenen Ansprüche, **dadurch gekennzeichnet, dass** die zur Absaughaube (6) gerichtete Seite des Werkzeugs (1) eine kegelstumpfförmige Kontur aufweist.

8. Bearbeitungsvorrichtung nach einem der vorangegangenen Ansprüche, **dadurch gekennzeichnet, dass** an dem Ring (17) der Absaughaube (6) ein weiterer Ring (8) zur Verringerung des Innendurchmessers der Absaughaube (6) anbringbar ist.

9. Bearbeitungsvorrichtung nach Anspruche 8, **dadurch gekennzeichnet, dass** der Ring (17) der Absaughaube (6) oder der daran befestigte weitere Ring (8) nahe an einem Eingriffspunkt (9) des Werkzeugs (1) mit dem Werkstück liegt.

10. Bearbeitungsvorrichtung nach einem der Ansprüche 2 bis 9, **dadurch gekennzeichnet, dass** die Absaugöffnung (15) radial an der Absaughaube (6) angeordnet ist.

11. Bearbeitungsvorrichtung nach einem der Ansprüche 2 bis 9, **dadurch gekennzeichnet, dass** die Absaugöffnung (15) tangential an der Absaughaube (6) angeordnet ist.

12. Bearbeitungsvorrichtung nach einem der Ansprüche 2 bis 11, **dadurch gekennzeichnet, dass** die Absaugöffnung (15) um 20° bis 150° in Bewegungsrichtung der Schneide (4) versetzt zu dem Eingriffspunkt (9) der Schneide (4) angeordnet ist.

13. Bearbeitungsvorrichtung nach Anspruch 12, **dadurch gekennzeichnet, dass** die Absaugöffnung (15) um etwa 90° in Bewegungsrichtung der Schneide (4) versetzt zu dem Eingriffspunkt (9) der Schneide (4) angeordnet ist.

14. Bearbeitungsvorrichtung nach einem der vorangegangenen Ansprüche, **dadurch gekennzeichnet, dass** an dem Werkzeug (1) zwei bis acht Schneiden (4) gleichmäßig am Umfang verteilt angeordnet sind.

## Claims

1. Working apparatus for working work pieces made of wood or plastic,
having a chip-removing, rotatable tool (1) having at least one cutting edge (4) arranged in the circumferential region of the tool,
having a stationary extractor hood (6) which is arranged coaxially with the rotating tool (1) and at least partially encompasses the latter from a driving side of the tool (1), wherein the extractor hood (6) can be connected to a vacuum source and a stationary ring (17) arranged on the extractor hood (6), closely adjoining the cutting edge (4), completely encompasses the tool (1) in the circumferential direction and at least partially encompasses it in the axial direction,
wherein a region (2) of the tool (1) adjoining the cutting edge (4) in each of axial and radial directions has a chip-receiving opening (10) for the passage of chips into a hollow inner chamber which is formed between the tool (1) and the extractor hood,
**characterised in that**
the chip-receiving opening (10) is substantially U-shaped, seen in the axial direction of the tool (1) , and **in that** the U-shaped chip-receiving opening (10) is oriented to open radially outwards, seen in the axial direction of the tool (1), and axially completely breaks through the tool.

2. Working apparatus according to claim 1, **characterised**
**in that** the ring (17) is arranged on the outer circumferential side of the extractor hood (6).

3. Working apparatus according to claim 1, **characterised**
**in that** the ring (17) is arranged on the inner circumferential side of the extractor hood (6).

4. Working apparatus according to any of claims 1 to 3,
**characterised in that** the ring (17) is constructed in one piece with the extractor hood (6).

5. Working apparatus according to any of the preceding claims, **characterised in that** an extraction opening (15), which is provided for connecting the extractor hood (6) via an extraction channel (16) to the vacuum source, is arranged offset from a point of engagement (9) of the cutting edge (4) of the rotating tool (1) with the work piece (7) in the direction of movement of the cutting edge (4).

6. Working apparatus according to any of the preceding claims, **characterised in that** the side of the tool (1) directed towards the extractor hood (6) has a contour (3) following the contour of the cutting edge (4).

7. Working apparatus according to any of the preceding claims, **characterised in that** the side of the tool (1) directed towards the extractor hood (6) has a frustoconical contour.

8. Working apparatus according to any of the preceding claims, **characterised in that** on the ring (17) of the extractor hood (6) can be fitted a further ring (8) for reducing the inside diameter of the extractor hood (6).

9. Working apparatus according to claim 8, **characterised**
**in that** the ring (17) of the extractor hood (6) or the further ring (8) attached thereto lies close to a point of engagement (9) of the tool (1) with the work piece.

10. Working apparatus according to any of claims 2 to 9,
**characterised in that** the extraction opening (15) is arranged radially on the extractor hood (6).

11. Working apparatus according to any of claims 2 to 9,
**characterised in that** the extraction opening (15) is arranged tangentially on the extractor hood (6).

12. Working apparatus according to any of claims 2 to 11,
**characterised in that** the extraction opening (15) is arranged offset from the point of engagement (9) of the cutting edge (4) by 20° to 150° in the direction of movement of the cutting edge (4).

13. Working apparatus according to claim 12, **characterised**
**in that** the extraction opening (15) is arranged offset from the point of engagement (9) of the cutting edge (4) by about 90° in the direction of movement of the cutting edge (4).

14. Working apparatus according to any of the preceding claims, **characterised in that** on the tool (1) are arranged two to eight cutting edges (4), evenly distributed over the circumference.

## Revendications

1. Dispositif d'usinage pour l'usinage de pièces d'oeuvre en bois ou matière synthétique,
avec un outil (1) susceptible d'être entraîné en rotation, opérant par enlèvement de copeaux, avec au moins un tranchant (4) disposé dans la zone périphérique de l'outil,
avec une hotte d'aspiration (6) localement fixe, disposée coaxialement par rapport à l'outil (1) rotatif et entourant celui-ci au moins partiellement depuis un côté entraînement de l'outil (1), la hotte d'aspiration (6) étant susceptible d'être reliée à une source d'aspiration d'air, et un anneau (17) disposé de façon localement fixe sur la hotte d'aspiration (6) et entourant l'outil (1) complètement en direction périphérique et au moins partiellement en direction axiale, de façon limitrophe et très près du tranchant (4)
où chaque fois une zone (2) limitrophe au tranchant (4) de l'outil (1) présente, en direction axiale et en direction radiale, une ouverture de logement de copeaux (10), pour permettre le passage des copeaux dans un espace intérieur creux, formé entre l'outil (1) et la hotte d'aspiration,
**caractérisé en ce que**
l'ouverture de logement de copeaux (10), en observant dans la direction axiale de l'outil (1), est conformée sensiblement en U, **en ce que** l'ouverture de logement de copeaux (10) en forme de U, en observant dans la direction axiale de l'outil (1), est orientée de façon à s'ouvrir radialement vers l'extérieur et traverse axialement complètement l'outil.

2. Dispositif d'usinage selon la revendication 1,
**caractérisé en ce que** l'anneau (17) est disposé sur la face périphérique extérieure de la hotte d'aspiration (6).

3. Dispositif d'usinage selon la revendication 1,
**caractérisé en ce que** l'anneau (17) est disposé sur la face périphérique intérieure de la hotte d'aspiration (6).

4. Dispositif d'usinage selon l'une des revendications 1 à 3, **caractérisé en ce que** l'anneau (17) est réalisé d'une seule pièce avec la hotte d'aspiration (6).

5. Dispositif d'usinage selon l'une des revendications précédentes, **caractérisé en ce qu'**une ouverture d'aspiration (15), prévue pour relier la hotte d'aspiration (6) à la source d'aspiration d'air par un canal d'aspiration (16), en observant dans la direction de déplacement du tranchant (-4) de l'outil (1) rotatif, est décalée par rapport à un point d'action (9) du tranchant (4) avec la pièce d'oeuvre (7).

6. Dispositif d'usinage selon l'une des revendications précédentes, **caractérisé en ce que** la face, orientée vers la hotte d'aspiration (6), de l'outil (1) présente un contour (3) reproduisant la forme du contour du tranchant (4).

7. Dispositif d'usinage selon l'une des revendications précédentes, **caractérisé en ce que** la face, orientée vers la hotte d'aspiration (6), de l'outil (1) présente un contour à forme tronconique.

8. Dispositif d'usinage selon l'une des revendications précédentes, **caractérisé en ce que** sur l'anneau (17) de la hotte d'aspiration (6) peut être monté un autre anneau (8), pour diminuer le diamètre intérieur de la hotte d'aspiration (6).

9. Dispositif d'usinage selon la revendication 8, **caractérisé en ce que** l'anneau (17) de la hotte d'aspiration (6), ou l'autre anneau (8) fixé sur elle, est situé à proximité d'un point d'action (9) de l'outil (1) avec la pièce d'oeuvre.

10. Dispositif d'usinage selon l'une des revendications 2 à 9, **caractérisé en ce que** l'ouverture d'aspiration (15) est disposée radialement sur la hotte d'aspiration (6).

11. Dispositif d'usinage selon l'une des revendications 2 à 9, **caractérisé en ce que** l'ouverture d'aspiration (15) est disposée tangentiellement sur la hotte d'aspiration (6).

12. Dispositif d'usinage selon l'une des revendications 2 à 11, **caractérisé en ce que** l'ouverture d'aspiration (15) est décalée de 20° à 150° dans la direction de déplacement du tranchant (4) par rapport au point d'action (9) du tranchant (4).

13. Dispositif d'usinage selon la revendication 12,
**caractérisé en ce que** l'ouverture d'aspiration (15) est disposée décalée, d'environ 90° dans la direction périphérique du tranchant (4), par rapport au point d'action (9) du tranchant (4).

14. Dispositif d'usinage selon l'une des revendications précédentes, **caractérisé en ce que** deux à huit tranchants (4) sont disposés, de façon répartie régulièrement sur la périphérie, sur l'outil (1).
